# EUROPEAN PATENT APPLICATION

(11) **EP 4 700 307 A1**
(43) Date of publication of application: **25.02.2026**
(21) Application number: 24792545.6
(22) Date of filing: 08.04.2024
(51) Int. Cl.: F25B 21/00, F25B 9/00, F25B 9/14, H01F 6/04

(54) **ROTARY COOLING DEVICE, SUPERCONDUCTING MAGNETIC DEVICE PROVIDED THEREWITH, AND MAGNETIC REFRIGERATION DEVICE**

(30) Priority: 19.04.2023 JP 2023068359
(71) Applicant: Hitachi, Ltd., Tokyo 100-8280 (JP)
(72) Inventor: WAKUDA Tsuyoshi, Tokyo 100-8280 (JP); AOKI Manabu, Tokyo 100-8280 (JP); NUMAZAWA Takenori, Tsukuba-shi, Ibaraki 305-0047 (JP); KAMIYA Koji, Tsukuba-shi, Ibaraki 305-0047 (JP)
(74) Representative: Mewburn Ellis LLP
(86) International application number: PCT/JP2024/014251
(87) International publication number: WO 2024/219270

(57) **Abstract**

The present invention provides a rotary cooling device capable of rotating an object to be cooled (such as a superconducting magnet) installed in a vacuum while being excited, the rotary cooling device being configured to cool the object to be cooled (such as a superconducting magnet) installed in a vacuum heat insulation container while rotating the object to be cooled. The rotary cooling device includes a heat exchange medium sealing container including a fixed-side heat exchange fin for performing heat exchange that is installed in a fixed cooling head of a refrigerator fixed to the vacuum heat insulation container, a rotating-side heat exchange fin for performing heat exchange that is installed in a rotary cooling head for cooling the object to be cooled, and a heat exchange medium for performing heat exchange that is replenished between the fixed-side heat exchange fin and the rotating-side heat exchange fin, the heat exchange medium being sealed for isolation from the vacuum heat insulation container. The heat exchange medium sealing container has a seal structure allowing the heat exchange medium sealing container to be rotatable around a partition wall of the fixed vacuum heat insulation container while maintaining airtightness.

## Description

### Technical Field

The present invention relates to a rotary cooling device, and a superconducting magnet device and a magnetic refrigerator that are each provided with the rotary cooling device, such as a rotary cooling device suitable for cooling a superconducting magnet that is rotatable in an excited state, and a superconducting magnet device and a magnetic refrigerator that are each provided with the rotary cooling device.

### Background Art

In recent years, highly efficient hydrogen liquefaction using magnetocaloric effect has attracted attention. The magnetocaloric effect is a property caused by entropy and dependence of temperature of a magnetic body. When a magnetic field is applied to the magnetic body at a constant temperature, magnetic moments of the magnetic body are aligned by the magnetic field to reduce the entropy.

Then, when the magnetic field is removed in an adiabatic state, heat is absorbed from the outside to cause the magnetic moments to be random. When this process is operated in a Carnot cycle manner, cooling is performed by adiabatic demagnetization.

A magnetic refrigerator using the magnetocaloric effect needs to repeatedly apply or remove a magnetic field to or from a magnetic working substance and to control a working fluid that exchanges heat with the magnetic working substance.

For example, NPL 1 describes active magnetic regenerative (AMR).

Operation of this AMR is performed by four steps of: 1) applying a magnetic field to a magnetic working substance; 2) flowing a working fluid from one direction to exchange heat; 3) removing a magnetic field; and 4) flowing the working fluid reversely to recover cold.

NPL 1 shows that a unit packed with a magnetic working substance is reciprocated in a magnetic field space formed by a permanent magnet that is fixed, thereby repeatedly applying and removing a magnetic field to and from the magnetic working substance.

In contrast, PTLs 1 and 2 show that application and removal of a magnetic field are repeated by a magnetic field generator rotating around a fixed magnetic working substance.

As for a hydrogen liquefier using a magnetic refrigerator, NPL 1 also discloses a liquefier in which a multi-stage AMR and a Carnot cycle magnetic refrigerator (CMR: Carnot Magnetic Refrigerator) for hydrogen condensation are combined.

To store and transport hydrogen using liquid hydrogen, not only liquefaction efficiency but also sufficient capability of liquefaction production is required. The magnetic refrigerator limits the amount of heat exchange based on the volume of the magnetic working substance, so that a large amount of the magnetic working substance needs to be disposed to apply and remove a strong magnetic field at a high frequency.

PTL 3 discloses such a magnetic field generation source implemented by a method for rotating a unit in which a plurality of superconducting coils is stacked with a gap.

### Citation List

### Patent Literature

PTL 1: JP 2006-308197 A
PTL 2: JP 2007-147209 A
PTL 3: JP 2022-136671 A

### Non Patent Literature

NPL 1: TEION KOGAKU (J. Cryo. Super. Soc. Jpn.) Vol.50 No.2 (2015)

### Summary of Invention

### Technical Problem

In general, a superconducting magnet needs to be cooled to a predetermined temperature or lower to maintain a superconducting state, and known examples of a method for cooling the superconducting magnet include an immersion cooling method for immersing a superconducting winding constituting the superconducting magnet in a liquid refrigerant, a gas cooling method for circulating a cooling gas, and a conduction cooling method for supplying cold from a refrigerator using a fixed heat transfer material.

Although cooling can be performed by any method for a stationary superconducting magnet, solid conductive cooling cannot be performed using a fixed refrigerator for a rotating superconducting magnet. The immersion cooling method or the gas cooling method enables cooling the rotating superconducting magnet.

In consideration of a rotary superconducting magnet for magnetic refrigeration, a unit for magnetic refrigeration needs to be inserted into a gap part of the rotary superconducting magnet in which a narrow gap is formed. The rotary superconducting magnet has an operation temperature different from a temperature of the unit for magnetic refrigeration, so that the unit for magnetic refrigeration needs to be thermally insulated to cool the rotary superconducting magnet by the gas cooling method or the like.

Unfortunately, a gap between a superconducting winding part and the unit for magnetic refrigeration needs to be small to effectively use a magnetic field space formed by the rotary superconducting magnet, so that it is extremely difficult to completely insulate the unit for magnetic refrigeration from gas cooling.

Complete thermal separation between both of the superconducting winding part and the unit for magnetic refrigeration is indispensable, and the both are disposed in a vacuum. Thus, the rotary superconducting magnet disposed in the vacuum is required to be cooled while being excited.

The present invention has been made in view of the above points, and it is an object of the present invention to provide a rotary cooling device capable of rotating an object to be cooled (such as a superconducting magnet) installed in a vacuum while being excited, and a superconducting magnet device and a magnetic refrigerator that are each provided with the rotary cooling device.

### Solution to Problem

To achieve the above object, a rotary cooling device according to the present invention cools an object to be cooled installed inside a vacuum heat insulation container while rotating the object to be cooled. The rotary cooling device includes a heat exchange medium sealing container including a fixed-side heat exchange fin for performing heat exchange that is installed in a fixed cooling head of a refrigerator fixed to the vacuum heat insulation container, a rotating-side heat exchange fin for performing heat exchange that is installed in a rotary cooling head for cooling the object to be cooled, and a heat exchange medium for performing heat exchange that is replenished between the fixed-side heat exchange fin and the rotating-side heat exchange fin, the heat exchange medium being sealed for isolation from the vacuum heat insulation container. The heat exchange medium sealing container has a seal structure allowing the heat exchange medium sealing container to be rotatable around a partition wall of the fixed vacuum heat insulation container while maintaining airtightness.

A superconducting magnet device of the present invention is provided with the rotary cooling device having the above configuration.

A magnetic refrigerator of the present invention is provided with the superconducting magnet device.

### Advantageous Effects of Invention

The present invention enables rotating an object to be cooled (such as a superconducting magnet) placed in a vacuum while the object is excited.

### Brief Description of Drawings

[FIG. 1] FIG. 1 is a conceptual diagram illustrating a rotary cooling device according to a first embodiment of the present invention, in which a cooling stage has one stage.
[FIG. 2] FIG. 2 is a conceptual diagram illustrating a rotary cooling device according to a second embodiment of the present invention, in which a cooling stage has two stages.
[FIG. 3] FIG. 3 is a perspective view illustrating an example of a configuration of a heat exchanger used in the rotary cooling device of the present invention.
[FIG. 4] FIG. 4 is a perspective view illustrating another example of the configuration of the heat exchanger used in the rotary cooling device of the present invention.
[FIG. 5] FIG. 5 is a diagram illustrating current supply to a rotary superconducting magnet in a rotary cooling device according to a second embodiment of the present invention.
[FIG. 6] FIG. 6 is a conceptual diagram illustrating a magnetic refrigerator provided with a superconducting magnet device having the rotary cooling device including the cooling stage having the two stages of the present invention.
[FIG. 7] FIG. 7 is a plan view illustrating a rotary superconducting magnet unit constituting a superconducting magnet device used for the rotary cooling device of the present invention.
[FIG. 8] FIG. 8 is a perspective view illustrating the rotary superconducting magnet unit of FIG. 7.

### Description of Embodiments

Hereinafter, a rotary cooling device of the present invention, and a superconducting magnet device and a magnetic refrigerator that are each provided with the rotary cooling device, will be described based on illustrated embodiments. Each drawing uses the same reference numerals for the same components.

The rotary cooling device of the present invention includes a heat exchange medium sealing container including a fixed-side heat exchange fin for performing heat exchange that is installed in a fixed cooling head of a refrigerator fixed to the vacuum heat insulation container, a rotating-side heat exchange fin for performing heat exchange that is installed in a rotary cooling head for cooling an object to be cooled, and a heat exchange medium for performing heat exchange that is replenished between the fixed-side heat exchange fin and the rotating-side heat exchange fin, the heat exchange medium being sealed for isolation from the vacuum heat insulation container. The heat exchange medium sealing container has a seal structure allowing the heat exchange medium sealing container to be rotatable around a partition wall of the fixed vacuum heat insulation container while maintaining airtightness.

As the refrigerator, a gas compression expansion type refrigerator is preferably used, and various refrigerators such as a Gifford-McMahon type refrigerator (GM refrigerator), a pulse tube refrigerator, a Stirling refrigerator, a Brayton refrigerator, and a turbo Brayton refrigerator are available.

Hereinafter, the present invention will be specifically described.

### [First embodiment]

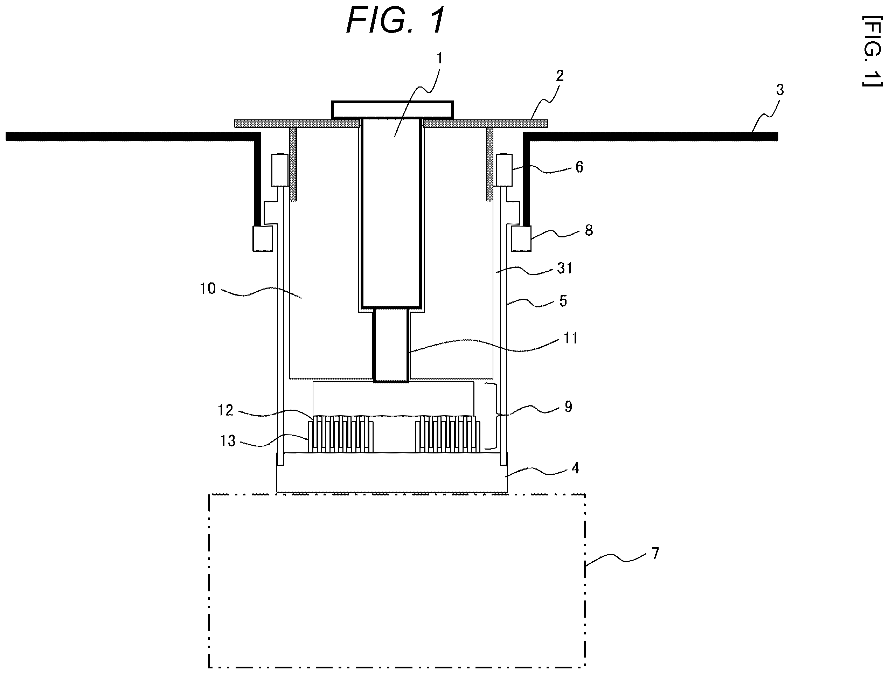

FIG. 1 illustrates a rotary cooling device according to a first embodiment of the present invention, the rotary cooling device including a cooling stage having one stage.

As illustrated in FIG. 1, the rotary cooling device of the present embodiment is provided with a refrigerator (GM refrigerator) 1 fixed to a vacuum heat insulation container 3, and the refrigerator (GM refrigerator) 1 includes a fixed cooling head (refrigerator cold head) 11 provided with a fixed-side heat exchange fin 12 for performing heat exchange and a rotary cooling head 4 for supplying cold to a rotary superconducting magnet 7 that is an object to be cooled.

The rotary cooling head 4 is provided with a rotating-side heat exchange fin 13 for performing heat exchange, and the fixed-side heat exchange fin 12 and the rotating-side heat exchange fin 13 are fitted with each other while maintaining a spatial distance, and are configured to be rotatable about a rotation axis.

A heat exchange medium 31 consisting of a gas or a liquid is replenished to enable heat exchange between the fixed-side heat exchange fin 12 and the rotating-side heat exchange fin 13, and the heat exchange medium 31 is sealed in a heat exchange medium sealing container 5 to be prevented from leaking into vacuum.

Then, the fixed cooling head 11, the fixed-side heat exchange fin 12, and the rotating-side heat exchange fin 13 are housed in the heat exchange medium sealing container 5 to constitute a rotary heat exchanger 9, and the heat exchange medium sealing container 5 has a seal structure (magnetic fluid seal 6) that enables rotation around a vacuum boundary surface formed to constitute a vacuum region while maintaining airtightness.

More specifically, the refrigerator (GM refrigerator) 1 is mounted on a flange 2 and attached to the vacuum heat insulation container 3, the rotary cooling head 4 and the heat exchange medium sealing container 5 are integrated having airtightness, the magnetic fluid seal 6 is installed between the heat exchange medium sealing container 5 and the flange 2, and the heat exchange medium sealing container 5 is rotatable while maintaining airtightness. The rotary superconducting magnet 7, which is an object to be cooled, is thermally coupled (tightly coupled for good heat transmission) and fixed to the rotary cooling head 4.

The vacuum heat insulation container 3 and the heat exchange medium sealing container 5 are engaged with each other having an engaged part provided with a bearing 8 that supports the rotary superconducting magnet 7 in a rotatable manner. The vacuum heat insulation container 3, the flange 2, the magnetic fluid seal 6, the heat exchange medium sealing container 5, and the rotary cooling head 4 constitute a vacuum boundary.

The heat exchange medium sealing container 5 is internally provided with a heat exchanger 9, the refrigerator (GM refrigerator) 1, a convection suppressor 10, and the like.

The heat exchanger 9 includes the fixed-side heat exchange fin 12 attached to the fixed cooling head (refrigerator cold head) 11, the rotating-side heat exchange fin 13 attached to the rotary cooling head 4, and the heat exchange medium 31 that is replenished between the fixed-side heat exchange fin 12 and the rotating-side heat exchange fin 13.

The replenished heat exchange medium 31 transports heat between the fixed-side heat exchange fin 12 and the rotating-side heat exchange fin 13, and the convection suppressor 10 is installed to suppress heat exchange with a high-temperature side, such as a flange part, due to movement of the heat exchange medium 31 caused by convection or the like.

Thus, the heat exchange medium 31 is sealed inside the heat exchange medium sealing container 5 to the minimum to exchange heat in the heat exchanger unit. A port or the like for injecting and discharging the heat exchange medium 31 or performing maintenance inside the heat exchange medium sealing container 5 is not illustrated.

Next, the heat exchanger 9 will be described.

The fixed-side heat exchange fin 12 and the rotating-side heat exchange fin 13 described above are disposed facing each other across a small gap (desirably 1 mm or less). The fixed-side heat exchange fin 12 and the rotating-side heat exchange fin 13 are each made of copper or aluminum having high thermal conductivity, for example.

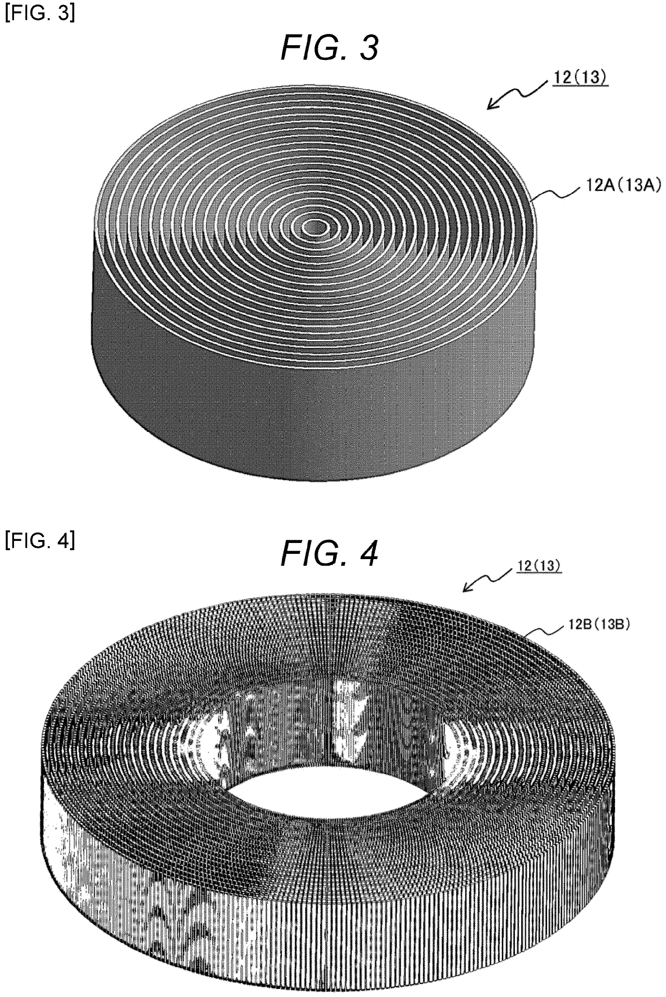

To allow the heat exchange medium sealing container 5 to be rotatable, the fixed-side heat exchange fin 12 and the rotating-side heat exchange fin 13 are formed with a gap therebetween to be prevented from interfering with each other in a rotation direction. Thus, a plate material 12A (13A) constituting the fixed-side heat exchange fin 12 or the rotating-side heat exchange fin 13 has a concentric circular shape about a rotation center axis as illustrated in FIG. 3.

Focusing on one fin of each of the fixed-side heat exchange fin 12 and the rotating-side heat exchange fin 13, the one fin is not required to be a perfect cylindrical shape, and thin columnar fins 12B (13B) may be disposed concentrically to increase a surface area of the one fin (see FIG. 4).

The fixed-side heat exchange fin 12 and the rotating-side heat exchange fin 13 also have a structure in which the fins can be shifted from each other not only in the rotation direction but also in a vertical direction (rotation axis direction). Sliding the fixed-side heat exchange fin 12 and the rotating-side heat exchange fin 13 in the rotation axis direction enables not only simplifying a structure and an assembling method for forming the vacuum boundary, but also absorbing an axial displacement due to a difference in thermal shrinkage between the refrigerator (GM refrigerator) 1 and the heat exchange medium sealing container 5.

The fixed-side heat exchange fin 12 and the rotating-side heat exchange fin 13 are designed to have a sufficient heat exchange area in accordance with the amount of heat exchange.

The fixed-side heat exchange fin 12 is thermally well fixed to the fixed cooling head 11 of the refrigerator (GM refrigerator) 1, and the rotating-side heat exchange fins 13 are thermally well fixed to the rotary cooling head 4 integrated with the heat exchange medium sealing container 5. The heat exchange medium 31 is in a liquid or gas state depending on a temperature of the fixed cooling head (refrigerator cold head) 11. For example, helium gas can be used for a temperature of 20 K or less.

Next, the convection suppressor 10 will be described.

When the heat exchange medium 31 is a gas, heat is transported between the gas close to the flange 2 and the rotary cooling head 4 by convection, that is, heat flows in from the gas at a high temperature close to the flange 2. The convection suppressor 10 described above is installed to prevent this heat transport.

Specifically, the convection suppressor 10 is formed of: a plurality of baffle plates (partition walls with small holes) that are arranged in the vertical direction with gaps between respective baffle plates; a foam insulation material, glass wool, of a vacuum insulation material, each of which has a small thermal conductivity, disposed without a gap; or a vacuum holding container disposed.

Next, the heat exchange medium sealing container 5 will be described.

The heat exchange medium sealing container 5 described above is a container with airtightness for preventing leakage and diffusion of the heat exchange medium 31 into the vacuum heat insulation container 3, and is integrated with the rotary cooling head 4 while maintaining airtightness. The heat exchange medium sealing container 5 facing room temperature is thermally coupled to the bearing 8 and the magnetic fluid seal 6, and thus is made of a material having low thermal conductivity, such as stainless steel, to minimize heat intrusion into the rotary cooling head 4.

Next, the magnetic fluid seal 6 will be described.

The magnetic fluid seal 6 is installed between the heat exchange medium sealing container 5 and the flange 2 to allow the heat exchange medium sealing container 5 to be rotatable while forming a vacuum partition wall. The magnetic fluid seal 6 only needs to be sufficient to secure vacuum (atmospheric pressure), and an elastic body seal (X ring) or the like can be used instead of the magnetic fluid seal 6. Then, the magnetic fluid seal 6 or the elastic body seal (X ring) is installed in an appropriate temperature environment (high-temperature side) without impairing sliding performance.

Next, the bearing 8 will be described.

The heat exchange medium sealing container 5 is integrated with a structure that is rotatably supported by the bearing 8 installed in the vacuum heat insulation container 3. The bearing 8 includes a thrust bearing for supporting weight and a radial bearing for suppressing rotational shake. The bearing is disposed inside the vacuum boundary, and thus airtightness at the bearing is unnecessary.

This configuration of the present embodiment enables the rotary superconducting magnet 7 installed in vacuum to be rotated maintaining an excited state.

Next, excitation of the rotary superconducting magnet 7 will be described.

The rotary cooling device according to the first embodiment described above includes a cooling stage having one stage in which cold is supplied only from the fixed cooling head (refrigerator cold head) 11 provided at a distal end of the refrigerator (GM refrigerator) 1.

In general, a two-stage refrigerator is used for cooling a superconducting magnet, and the two-stage refrigerator is provided with a high-temperature side cooling head called a first stage and a low-temperature side cooling head called a second stage.

The superconducting magnet in a stationary state usually is thermally coupled to the second stage on the low temperature side to bring the superconducting coil into a superconducting state, and the cooling head of the second stage on the low temperature side is usually operated to have a temperature of 10 K or less. The first stage on the high-temperature side is used for cooling a current lead that supplies a current to the superconducting coil and cooling a radiation shield.

To excite the rotary superconducting magnet 7, a current needs to be introduced from the outside (room temperature) of the vacuum heat insulation container 3. Thus, the current lead between the room temperature and a temperature at the first stage has a shape for minimizing the amount of heat intrusion by performing optimum design in which the amount of heat intrusion (thermal conductivity) and Joule heat generation (electrical resistivity) are balanced, and then is made of a material such as copper phosphate deoxidized.

In a temperature region between the first stage and the second stage, a superconducting current lead with a low thermal conductivity and without generating Joule heat is used.

Thus, the rotary cooling device of the present embodiment also requires a cooling stage having two stages to energize the superconducting coil.

### [Second embodiment]

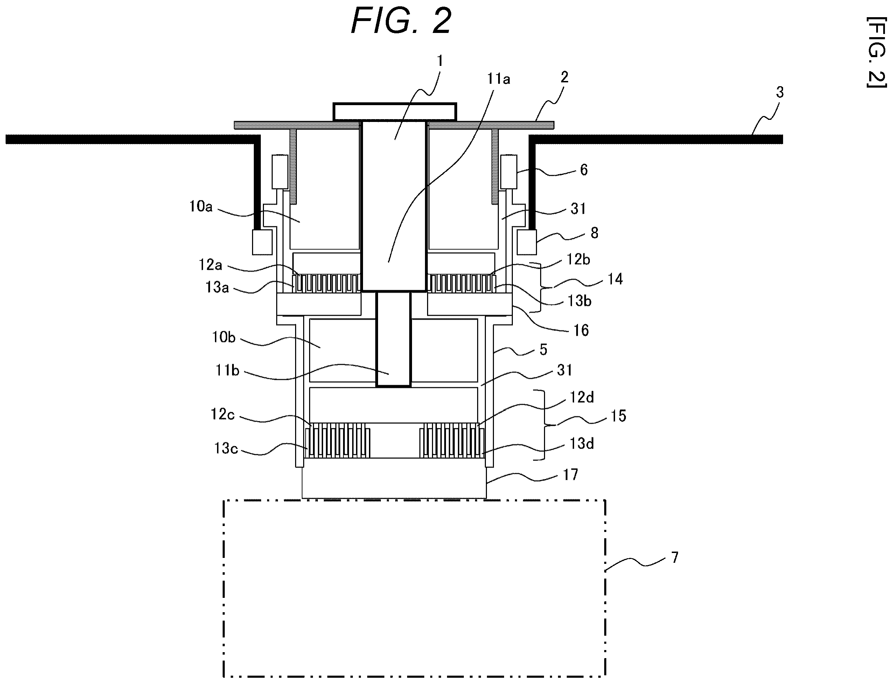

FIG. 2 illustrates a rotary cooling device including a cooling stage having two stages according to a second embodiment of the present invention. The rotary cooling device of the present embodiment is identical in a basic concept to the rotary cooling device including the cooling stage having one stage according to the first embodiment illustrated in FIG. 1. A fixed-side heat exchange fin of the present embodiment is separated into a first fixed-side heat exchange fin 12a and a second fixed-side heat exchange fin 12b.

As illustrated in FIG. 2, the rotary cooling device of the present embodiment is provided with at least one refrigerator (GM refrigerator) 1 fixed to a vacuum heat insulation container 3. The refrigerator (GM refrigerator) 1 includes: a fixed cooling head including a first stage fixed cooling head 11a as a first fixed cooling head and a second stage fixed cooling head 11b as a second fixed cooling head; and a rotary cooling head for supplying cold to a rotary superconducting magnet 7 to be cooled, including a first stage rotary cooling head 16 as a first rotary cooling head and a second stage rotary cooling head 17 as a second rotary cooling head at different in temperatures.

The first stage fixed cooling head 11a is provided with the first fixed-side heat exchange fin 12a and the second fixed-side heat exchange fin 12b that are for performing heat exchange, and the first stage rotary cooling head 16 is provided with a first rotating-side heat exchange fin 13a and a second rotating-side heat exchange fin 13b that are for performing heat exchange. Not only the first fixed-side heat exchange fin 12a and the second fixed-side heat exchange fin 12b, but also the first rotating-side heat exchange fin 13a and the second rotating-side heat exchange fin 13b are fitted with each other while maintaining a spatial distance, and are configured to be rotatable about a rotation axis.

A heat exchange medium 31 consisting of a gas or a liquid is replenished to enable heat exchange not only between the first fixed-side heat exchange fin 12a and the second fixed-side heat exchange fin 12b, but also between the first rotating-side heat exchange fin 13a and the second rotating-side heat exchange fin 13b, and the heat exchange medium 31 is sealed in a heat exchange medium sealing container 5 to be prevented from leaking into vacuum.

The first stage fixed cooling head 11a, the first fixed-side heat exchange fin 12a, the second fixed-side heat exchange fin 12b, the first rotating-side heat exchange fin 13a, and the second rotating-side heat exchange fin 13b are housed in the heat exchange medium sealing container 5 to constitute a first stage heat exchanger 14 of a rotary type that is a first rotary heat exchanger.

The second stage fixed cooling head 11b is provided with a third fixed-side heat exchange fin 12c and a fourth fixed-side heat exchange fin 12d that are for performing heat exchange, and the second stage rotary cooling head 17 is provided with a third rotating-side heat exchange fin 13c and a fourth rotating-side heat exchange fin 13d that are for performing heat exchange. Not only the third fixed-side heat exchange fin 12c and the fourth fixed-side heat exchange fin 12d, but also the third rotating-side heat exchange fin 13c and the fourth rotating-side heat exchange fin 13d are fitted with each other while maintaining a spatial distance, and are configured to be rotatable about a rotation axis.

The heat exchange medium 31 consisting of a gas or a liquid is replenished to enable heat exchange not only between the third fixed-side heat exchange fin 12c and the fourth fixed-side heat exchange fin 12d, but also between the third rotating-side heat exchange fin 13c and the fourth rotating-side heat exchange fin 13d, and the heat exchange medium 31 is sealed in a heat exchange medium sealing container 5 to be prevented from leaking into vacuum.

Then, the second stage fixed cooling head 11b, the third fixed-side heat exchange fin 12c, the fourth fixed-side heat exchange fin 12d, the third rotating-side heat exchange fin 13c, and the fourth rotating-side heat exchange fin 13d are housed in the heat exchange medium sealing container 5 to constitute a second stage heat exchanger 15 of a rotary type that is a second rotary heat exchanger, and the heat exchange medium sealing container 5 has a seal structure (magnetic fluid seal 6) that enables rotation around a vacuum boundary surface formed to constitute a vacuum region while maintaining airtightness.

More specifically, the first stage heat exchanger 14 and the second stage heat exchanger 15 are installed to extract cold from the first stage and the second stage of the refrigerator (GM refrigerator) 1, respectively, and the cold is transported to the first stage rotary cooling head 16 and the second stage rotary cooling head 17 using the heat exchange medium 31.

The first stage is operated at a temperature of about 60 K and the second stage is operated at a temperature of about 10 K, and thus causing a temperature difference between the first stage and the second stage. For this reason, the first stage convection suppressor 10a and the second stage convection suppressor 10b are installed to prevent heat from being exchanged between the first stage and the second stage using the heat exchange medium 31.

From the viewpoint of exposing the first stage rotary cooling head 16 and ease of assembly, the heat exchange medium sealing container 5 is configured in a divided manner, and is made of a material having a low thermal conductivity such as stainless steel, for example, to suppress heat exchange between the first stage rotary cooling head 16 and the second stage rotary cooling head 17.

As described above, a rotary cooling device including a cooling stage having two stages, which is capable of operating the rotary superconducting magnet 7, can be configured.

Next, current supply to the rotary superconducting magnet 7 in the second embodiment will be described.

In general, a current must be supplied to excite a superconducting magnet. Examples of an operation mode of the superconducting magnet include two types of permanent current mode operation and power supply drive mode operation.

The permanent current mode operation is performed in which after a current is supplied from a power supply to a superconducting magnet, the superconducting magnet is shortcircuited using a persistent current switch (PCS) to form a superconducting closed circuit, and then the power supply is disconnected.

The term, "the power supply is disconnected", used herein means that after the superconducting closed circuit is formed, a current flowing is reduced to zero, and a power lead itself of a path for supplying the current to the superconducting magnet is physically removed. A permanent current mode magnet disconnected from the power supply can be treated just like a permanent magnet.

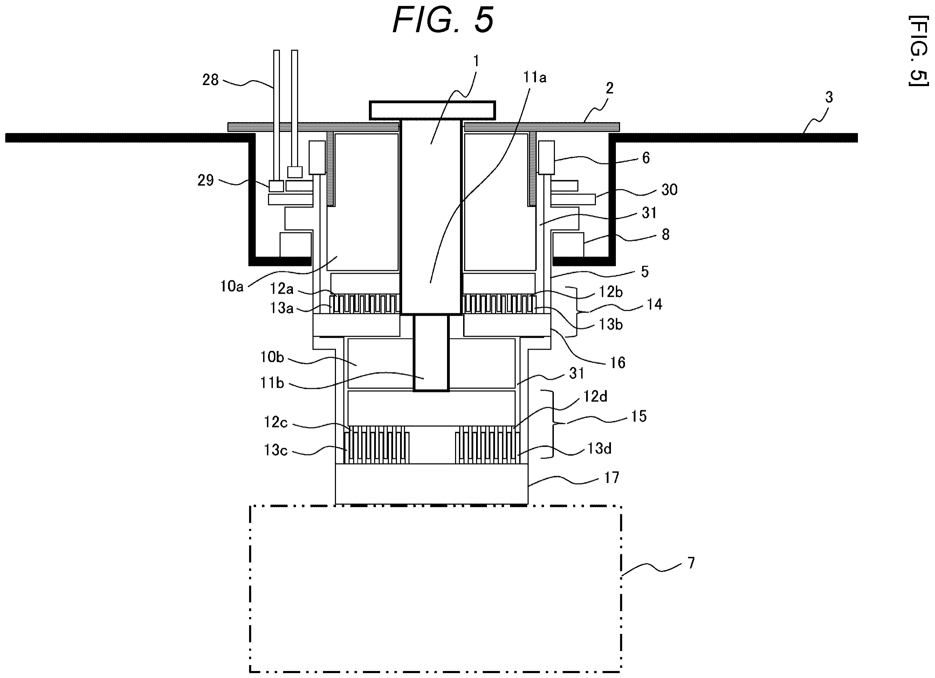

Excitation can be performed by steps of: stopping the rotary superconducting magnet 7 before a magnetic refrigerator is operated; inserting a power lead 28 (see FIG. 5) from the flange part; and coupling the power lead 28 to a connection point with a superconducting coil.

In contrast, the latter power supply drive mode operation requires continuous supply of a current while the rotary superconducting magnet 7 is rotating. For this operation, a slip ring 30 is installed outside the heat exchange medium sealing container 5 as illustrated in FIG. 5 to supply a current through the slip ring 30. Although the slip ring 30 and a carbon brush 29 each can be installed at any position, a position accessible from a flange 2 is desirable in consideration of ease of maintenance.

Although dust is generated due to sliding between the slip ring 30 and the carbon brush 29, consideration of preventing the inside of vacuum heat insulation container 3 from being contaminated is desirable.

Internal wiring (not illustrated) from the slip ring 30 to the superconducting coil is appropriately electrically insulated and then fixed to the heat exchange medium sealing container 5. The internal wiring in a normal conducting state is replaced with a superconducting current lead (not illustrated) and connected to the superconducting coil after a thermal anchor is provided in the first stage rotating head 16.

### [Third embodiment]

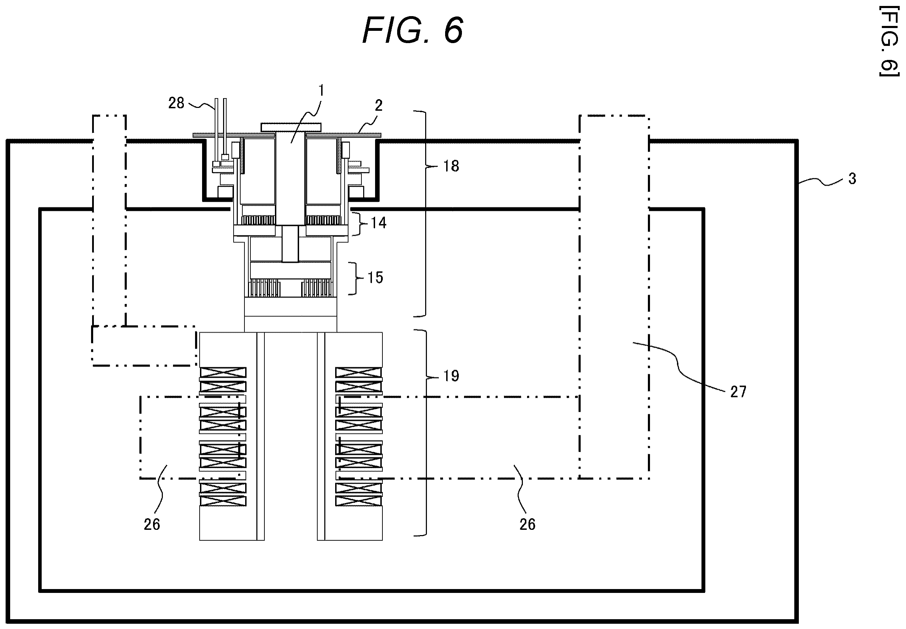

With reference to FIGS. 6, 7, and 8, a superconducting magnet device provided with the rotary cooling device including the cooling stage having the two stages of the second embodiment described above and a magnetic refrigerator provided with the superconducting magnet device will be described.

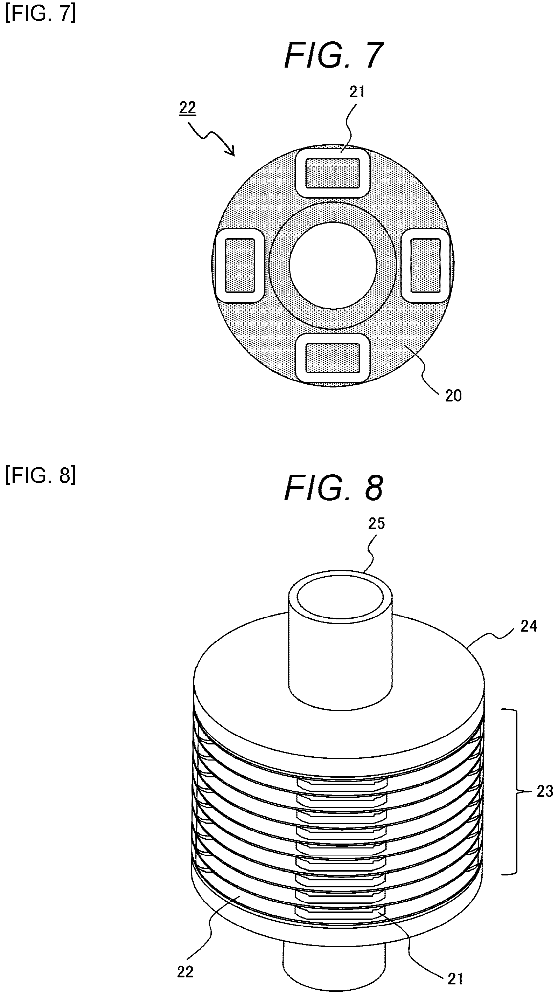

FIG. 6 illustrates a conceptual diagram of the magnetic refrigerator provided with the superconducting magnet device including the cooling stage having the two stages of the second embodiment, FIG. 7 illustrates a plan view of a rotary superconducting magnet unit constituting the superconducting magnet device provided with the rotary cooling device, and FIG. 8 illustrates a perspective view of the rotary superconducting magnet unit.

As illustrated in FIG. 6, a two-stage rotary cooling device 18 is provided in an upper part of a vacuum heat insulation container 3, and a rotary superconducting magnet unit 19 in good thermal contact is attached below on a second stage rotary cooling head 17 of the two-stage rotary cooling device 18.

The rotary superconducting magnet unit 19 includes a stacked rotating disk unit 23 including a plurality of rotating disk units 22 each provided with a superconducting coil supporting disk 20 including a total of eight superconducting coils 21 installed on its both surfaces as illustrated in FIG. 7, the plurality of rotating disk units 22 being stacked as illustrated in FIG. 8, and end rings 24 made of iron that are each disposed at an end of the stacked rotating disk unit 23.

The rotary superconducting magnet unit 19 is provided at its center with a heat transfer shaft 25 made of oxygen-free copper for distributing cold to the superconducting coil 21, and the entire superconducting magnet is cooled through the second stage rotary cooling head 17 of the two-stage rotary cooling device 18 and the heat transfer shaft 25 that are thermally coupled.

The superconducting coils 21 of the stacked rotating disk unit 23 are provided with gaps between corresponding superconducting coils 21 in the axial direction, and a magnetic refrigeration magnetic body unit 26 sealing a magnetic body having a magnetocaloric effect is inserted into each gap.

The magnetic refrigeration magnetic body unit 26 includes a pipe that is appropriately installed to generate a temperature difference for application and removal of a magnetic field in accordance with rotation of the rotary superconducting magnet unit 19, the pipe allowing a working fluid to appropriately flow in the pipe. Then, the pipe for supplying and moving the working fluid to and from the magnetic refrigeration magnetic body unit 26 and an exhaust heat unit 27 for drawing heat from the magnetic refrigeration magnetic body unit 26 are installed in the vacuum heat insulation container 3. Additionally, an operation valve (not illustrated) for moving the working fluid in synchronization with rotation of the rotary superconducting magnet unit 19 is disposed outside the vacuum heat insulation container 3.

The rotary superconducting magnet unit 19 is rotated by a mechanism that is not limited at all and may be appropriately configured. For example, a motor serving as a drive source for rotating the rotary superconducting magnet unit 19 is disposed outside the vacuum heat insulation container 3. The motor transmits a rotational force to the inside of the vacuum heat insulation container 3 through a heat insulation torque tube to enable the rotary superconducting magnet unit 19 to be rotated using a combination of a chain and a sprocket.

The two-stage rotary cooling device 18 of the second embodiment as described above enables not only cooling and operating the rotary superconducting magnet unit 19 during rotating by solid conduction cooling using the fixed refrigerator (GM refrigerator) 1, but also continuously and repeatedly applying and removing a magnetic field for driving the magnetic refrigeration magnetic body unit 26.

Although the GM refrigerator has been described as an example of the refrigerator 1 in each of the embodiments described above, a gas compression expansion type refrigerator including a pulse tube refrigerator may be used instead of the GM refrigerator.

The present invention is not limited to the embodiments described above, and includes various modifications. For example, the embodiments described above have been described in detail to describe the present invention in an easy-to-understand manner, and thus the present invention is not necessarily limited to those provided with all the configurations described. The configuration of one of the embodiments can be partially replaced with the configuration of another embodiment, and the configuration of one of the embodiments can include addition of the configuration of another embodiment. Additionally, addition, deletion, and replacement of another configuration is allowed for a part of the configuration of each of the embodiments.

### [Industrial applicability]

The rotary cooling device of the present invention and the superconducting magnet device provided with the rotary cooling device are applicable to a magnetic refrigerator using a magnetocaloric effect, and available for a liquid hydrogen liquefaction device or the like.

### Reference Signs List

1 refrigerator (GM refrigerator)
2 flange
3 vacuum heat insulation container
4 rotary cooling head
5 heat exchange medium sealing container
6 magnetic fluid seal
7 rotary superconducting magnet
8 bearing
9 heat exchanger
10 convection suppressor
10a first stage convection suppressor
10b second stage convection suppressor
11 fixed cooling head (refrigerator cold head)
11a first stage fixed cooling head
11b second stage fixed cooling head
12 fixed-side heat exchange fin
12A plate material constituting fixed-side heat exchange fin
12a first fixed-side heat exchange fin
12b second fixed-side heat exchange fin
12c third fixed-side heat exchange fin
12d fourth fixed-side heat exchange fin
12B, 13B columnar fin
13 rotating-side heat exchange fin
13A plate material constituting rotating-side heat exchange fin
13a first rotating-side heat exchange fin
13b second rotating-side heat exchange fin
13c third rotating-side heat exchange fin
13d fourth rotating-side heat exchange fin
14 first stage heat exchanger
15 second stage heat exchanger
16 first stage rotary cooling head
17 second stage rotary cooling head
18 two-stage rotary cooling device
19 rotary superconducting magnet unit
20 superconducting coil supporting disk
21 superconducting coil
22 rotating disk unit
23 stacked rotating disk unit
24 end ring
25 heat transfer shaft
26 magnetic refrigeration magnetic body unit
27 exhaust heat unit
28 power lead
29 carbon brush
30 slip ring
31 heat exchange medium

## Claims

1. A rotary cooling device that cools an object to be cooled installed inside a vacuum heat insulation container while rotating the object to be cooled, the rotary cooling device comprising:
a heat exchange medium sealing container including: a fixed-side heat exchange fin for performing heat exchange that is installed in a fixed cooling head of a refrigerator fixed to the vacuum heat insulation container; a rotating-side heat exchange fin for performing heat exchange that is installed in a rotary cooling head for cooling the object to be cooled; and a heat exchange medium for performing heat exchange that is replenished between the fixed-side heat exchange fin and the rotating-side heat exchange fin, the heat exchange medium being sealed for isolation from the vacuum heat insulation container, and
the heat exchange medium sealing container having a seal structure allowing the heat exchange medium sealing container to be rotatable around a partition wall of the fixed vacuum heat insulation container while maintaining airtightness.

2. The rotary cooling device according to claim 1, further comprising:
the refrigerator fixed to the vacuum heat insulation container, wherein the fixed cooling head of the refrigerator is provided with the fixed-side heat exchange fin for performing heat exchange and the rotary cooling head for supplying cold to the object to be cooled, wherein
the rotary cooling head is provided with the rotating-side heat exchange fin for performing heat exchange, and the fixed-side heat exchange fin and the rotating-side heat exchange fin are fitted with each other while maintaining a spatial distance and are configured to be rotatable about a rotation axis,
the heat exchange medium consisting of a gas or a liquid is replenished for heat exchange between the fixed-side heat exchange fin and the rotating-side heat exchange fin, and the heat exchange medium is sealed in the heat exchange medium sealing container to be prevented from leaking into vacuum,
the fixed cooling head, the fixed-side heat exchange fin, and the rotating-side heat exchange fin are housed in the heat exchange medium sealing container to constitute a rotary heat exchanger, and the heat exchange medium sealing container has a seal structure allowing the heat exchange medium sealing container to be rotatable around a vacuum boundary surface formed to constitute a vacuum region while maintaining airtightness.

3. The rotary cooling device according to claim 2, wherein
the refrigerator is mounted on a flange and attached to the vacuum heat insulation container, the rotary cooling head and the heat exchange medium sealing container are integrated having airtightness, and a magnetic fluid seal or an elastic body seal is installed between the heat exchange medium sealing container and the flange.

4. The rotary cooling device according to claim 2, wherein
the vacuum heat insulation container and the heat exchange medium sealing container face each other at a part in which a bearing is installed, and the bearing supports, in a rotatable manner, the object to be cooled installed inside the vacuum heat insulation container.

5. The rotary cooling device according to claim 2, wherein
the fixed-side heat exchange fin, the rotating-side heat exchange fin, and the heat exchange medium replenished between the fixed-side heat exchange fin and the rotating-side heat exchange fin constitute a heat exchanger, the rotary cooling device further comprising
a convection suppressor for suppressing heat exchange with a high-temperature side due to movement of the heat exchange medium by convection caused between the fixed-side heat exchange fin and the rotating-side heat exchange fin.

6. The rotary cooling device according to claim 5, wherein
the convection suppressor is formed of: a plurality of baffle plates arranged in a vertical direction with gaps between respective baffle plates; one of a foam insulation material, glass wool, and a vacuum insulation material, each of which has a small thermal conductivity, being disposed without a gap; or a vacuum holding container being disposed.

7. The rotary cooling device according to claim 1, further comprising
at least the refrigerator fixed to the vacuum heat insulation container, the refrigerator including a fixed cooling head provided with first and second fixed cooling heads, the rotary cooling head for supplying cold to the object to be cooled including first and second rotary cooling heads at different temperatures, wherein
the first fixed cooling head is provided with first and second fixed-side heat exchange fins for performing heat exchange, and the first rotary cooling head is provided with first and second rotating-side heat exchange fins for performing heat exchange,
the first and second fixed-side heat exchange fins and the first and second rotating-side heat exchange fins are fitted with each other while maintaining a spatial distance, and are configured to be rotatable about a rotation axis,
the heat exchange medium consisting of a gas or a liquid is replenished for heat exchange between the first and second fixed-side heat exchange fins and the first and second rotating-side heat exchange fins, and the heat exchange medium is sealed in the heat exchange medium sealing container to be prevented from leaking into vacuum,
the first fixed cooling head, the first and second fixed-side heat exchange fins, and the first and second rotating-side heat exchange fins are housed in the heat exchange medium sealing container to constitute a first rotary heat exchanger,
the second fixed cooling head is provided with third and fourth fixed-side heat exchange fins for performing heat exchange, and the second rotary cooling head is provided with third and fourth rotating-side heat exchange fins for performing heat exchange,
the third and fourth fixed-side heat exchange fins and the third and fourth rotating-side heat exchange fins are fitted with each other while maintaining a space distance, and are configured to be rotatable about the rotation axis,
the heat exchange medium consisting of the gas or the liquid is replenished for heat exchange between the third and fourth fixed-side heat exchange fins and the third and fourth rotating-side heat exchange fins, and the heat exchange medium is sealed in the heat exchange medium sealing container to be prevented from leaking into the vacuum, and
the second fixed cooling head, the third and fourth fixed-side heat exchange fins, and the third and fourth rotating-side heat exchange fins are housed in the heat exchange medium sealing container to constitute a second rotary heat exchanger, and the heat exchange medium sealing container has a seal structure allowing the heat exchange medium sealing container to be rotatable around a vacuum boundary surface formed to constitute a vacuum region while maintaining airtightness.

8. The rotary cooling device according to claim 7, wherein
the refrigerator is mounted on a flange and attached to the vacuum heat insulation container, the first and second rotary cooling heads and the heat exchange medium sealing container are integrated having airtightness, and a magnetic fluid seal or an elastic body seal is installed between the heat exchange medium sealing container and the flange.

9. The rotary cooling device according to claim 7, wherein
the vacuum heat insulation container and the heat exchange medium sealing container face each other at a part in which a bearing is installed, and the bearing supports, in a rotatable manner, the object to be cooled installed inside the vacuum heat insulation container.

10. The rotary cooling device according to claim 7, wherein
the first and second fixed-side heat exchange fins, the first and second rotating-side heat exchange fins, and the heat exchange medium replenished between the first and second fixed-side heat exchange fins, and the first and second rotating-side heat exchange fins constitute a first heat exchanger, the rotary cooling device further comprising
a first convection suppressor for suppressing heat exchange with a high-temperature side due to movement of the heat exchange medium by convection caused between the first and second fixed-side heat exchange fins, and the first and second rotating-side heat exchange fins, and
the third and fourth fixed-side heat exchange fins, the third and fourth rotating-side heat exchange fins, and the heat exchange medium replenished between the third and fourth fixed-side heat exchange fins, and the third and fourth rotating-side heat exchange fins, constitute a second heat exchanger, the rotary cooling device further comprising a second convection suppressor for suppressing heat exchange with a high-temperature side due to movement of the heat exchange medium by convection caused between the third and fourth fixed-side heat exchange fins, and the third and fourth rotating-side heat exchange fins.

11. The rotary cooling device according to claim 10, wherein
the first and second convection suppressor are each formed of: a plurality of baffle plates arranged in a vertical direction with gaps between respective baffle plates; one of a foam insulation material, glass wool, and a vacuum insulation material, each of which has a small thermal conductivity, being disposed without a gap; or a vacuum holding container being disposed.

12. The rotary cooling device according to claim 1, wherein
the refrigerator is a gas compression expansion type refrigerator, examples of the gas compression expansion type refrigerator including a GM refrigerator and a pulse tube refrigerator.

13. A superconducting magnet device comprising the rotary cooling device according to any one of claims 1 to 12, wherein the object to be cooled according to claim 1 is a rotary superconducting magnet, and the rotary cooling device includes the rotary superconducting magnet.

14. The superconducting magnet device according to claim 13, further comprising
a rotary superconducting magnet unit including the rotary superconducting magnet, the rotary superconducting magnet unit including: a stacked rotating disk unit including a plurality of rotating disk units each provided with a superconducting coil supporting disk on which a plurality of superconducting coils is installed; and an end ring made of iron that is disposed at an end of the stacked rotating disk unit.

15. A magnetic refrigerator comprising the superconducting magnet device according to claim 14.

16. The magnetic refrigerator according to claim 15, further comprising
a magnetic refrigeration magnetic body unit, the magnetic refrigeration magnetic body unit including a pipe that is installed to generate a temperature difference for application and removal of a magnetic field in accordance with rotation of the rotary superconducting magnet unit, the pipe allowing a working fluid to flow in the pipe, wherein the pipe for supplying and moving the working fluid to and from the magnetic refrigeration magnetic body unit and an exhaust heat unit for drawing heat from the magnetic refrigeration magnetic body unit are installed in the vacuum heat insulation container.
